(19) Europäisches Patentamt
European Patent Office
Office européen des brevets

(11) EP 3 764 450 B1

(12) # EUROPEAN PATENT SPECIFICATION

(45) Date of publication and mention of the grant of the patent:
**23.04.2025 Bulletin 2025/17**

(21) Application number: **19840098.8**

(22) Date of filing: **03.07.2019**

(51) International Patent Classification (IPC):
***H01M 10/0565*** (2010.01) ***H01M 10/052*** (2010.01)
***H01M 10/0525*** (2010.01)

(52) Cooperative Patent Classification (CPC):
**H01M 10/0525; H01M 10/052; H01M 10/0565;**
Y02E 60/10

(86) International application number:
**PCT/KR2019/008106**

(87) International publication number:
**WO 2020/022665 (30.01.2020 Gazette 2020/05)**

(54) **POLYMER ELECTROLYTE AND MANUFACTURING METHOD THEREFOR**

POLYMERELEKTROLYT UND HERSTELLUNGSVERFAHREN DAFÜR

ÉLECTROLYTE POLYMÈRE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2018 KR 20180086460**

(43) Date of publication of application:
**13.01.2021 Bulletin 2021/02**

(73) Proprietor: **LG Energy Solution, Ltd.**
**Seoul 07335 (KR)**

(72) Inventors:
- **LEE, Jehoon**
  **Daejeon 34122 (KR)**
- **KIM, Lucia**
  **Daejeon 34122 (KR)**
- **HAN, Dong Hyeop**
  **Daejeon 34122 (KR)**
- **CHAE, Jonghyun**
  **Daejeon 34122 (KR)**
- **CHANG, Wansoo**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**JP-A- 2016 062 895**
**KR-A- 20170 083 387**
**KR-B1- 101 232 607**
**KR-B1- 101 232 607**
**US-A1- 2015 221 980**
**US-A1- 2015 221 980**

- **NAOTO AOYAGI ET AL: "Functional RAFT agents for radical-controlled polymerization: Quantitative synthesis of trithiocarbonates containing functional groups as RAFT agents using equivalent amount of CS 2", JOURNAL OF POLYMER SCIENCE PART A: POLYMER CHEMISTRY, vol. 47, no. 14, 15 July 2009 (2009-07-15), US, pages 3702 - 3709, XP055679953, ISSN: 0887-624X, DOI: 10.1002/pola.23410**
- **LUCA PORCARELLI ET AL: "Single-Ion Block Copoly(ionic liquid)s as Electrolytes for All-Solid State Lithium Batteries", APPLIED MATERIALS & INTERFACES, vol. 8, no. 16, 27 April 2016 (2016-04-27), US, pages 10350 - 10359, XP055363862, ISSN: 1944-8244, DOI: 10.1021/acsami.6b01973**
- **AOYAGI, N.: "Functional RAFT agents for radical-controlled polymerization: Quantitative synthesis of trithiocarbonates containing functional groups as RAFT agents using equivalent amount of CS 2", JOURNAL OF POLYMER SCIENCE PART A, POLYMER CHEMISTRY, vol. 47, no. 14, 2009, pages 3702 - 3709, XP055679953**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 764 450 B1

## Description

[Technical Field]

This application claims priorities from Korean Patent Application No. 10-2018-0086460, filed on July 25, 2018.
The present invention relates to a polymer electrolyte excellent in mobility and ionic conductivity and a method for manufacturing the same.

[Background Art]

For current portable electronic devices, a lithium ion secondary battery with high energy density is commonly used. The liquid electrolyte, which is mainly used in this case, has problems such as the risk of leakage and explosion. In order to protect them, a safety circuit device is required, and the weight of the battery is inevitably increased by being sealed with a metal sheath can to prevent the leakage. In addition, since the thickness of the battery becomes thick, there is a limitation in battery design. As electronic devices become thinner and flexible in the future, the lithium ion secondary battery, which currently uses liquid as an electrolyte, cannot meet all of the requirements such as miniaturization, light weight, and flexibility.
On the other hand, a lithium polymer battery has high average voltage and high energy density. Also, in addition to the properties of a lithium ion secondary battery with no memory effect, the lithium polymer battery can prevent leakage of the electrolyte to the outside of the battery, thereby improving the stability of the battery. Also, in the case of the lithium polymer battery, since the electrode and the separator are integrated, the surface resistance is reduced, thereby being advantageous for high efficiency charging and discharging with relatively low internal resistance. In addition, the electrolyte film can be thinned to make flexible devices and batteries of any shape, and since the metal sheath can is not used, the thickness of the battery may be thinner. Therefore, batteries for portable electronic devices such as mobile phones, notebook computers, and digital cameras, which are increasing in demand by the consumer for stability, miniaturization, and high capacity, are expected to be largely replaced by lithium polymer batteries from existing lithium ion batteries. Also, the lithium polymer battery is expected to be applied to a high capacity lithium secondary battery for a hybrid electric vehicle and the like, and thus is gaining popularity as a next-generation battery.
The most important difference of the lithium polymer battery compared to the lithium ion secondary battery using the liquid electrolyte is that the separator between the positive electrode and the negative electrode is made of a polymer, and this polymer separator can also act as an electrolyte. In the lithium polymer battery, ion conduction is achieved by internal ion transfer of a stable polymer electrolyte as in a solid phase.
The polymer electrolyte used in the lithium polymer battery is being studied roughly in two parts, an intrinsic solid polymer electrolyte and a gel-type polymer electrolyte, wherein in the case of the intrinsic solid polymer electrolyte, ions of dissociated salts by adding electrolytic salts to the polymer containing heteroatoms such as O, N, and S are moved by segmental movement of the polymer, and wherein in the case of the gel-type polymer electrolyte, ionic conductivity is obtained by impregnating a liquid electrolyte into the polymer film and immobilizing it with electrolytic salts.
Among them, in the case of gel-type polymer electrolyte, there is still a difficulty in securing the stability of the battery due to the occurrence of leakage of the existing liquid electrolyte at the time of use, and also there is a problem of the difficulty in the process for manufacturing the battery. The intrinsic solid polymer electrolyte has been studied continuously since the discovery by P. V. Wright in 1975 that sodium ions are conducted in poly(ethylene oxide) (PEO). The intrinsic solid polymer electrolyte has high chemical and electrochemical stability and has the advantage that a high capacity lithium metal electrode can be used, but it has a problem of very low ionic conductivity at room temperature.
The ionic conductivity in the intrinsic solid polymer electrolyte has been found to be closely related to the degree of local motion of the polymer chain, and thus several methods have been studied to lower the high crystallinity of the PEO-based polymer electrolyte so that dissociated ions move freely.
As one of the methods, studies have been conducted to graft a low molecular weight PEO as a side chain to a flexible polymer main chain having a very low Tg value. A siloxane polymer electrolyte having various lengths of PEO as branches at both sides were synthesized, and when the siloxane polymer has six PEO repeating chains, which does not exhibit crystallinity, it showed high ionic conductivity of $4.5\times10^{-4}$ S/cm at room temperature.
In order to overcome and improve the problems of the conventional electrolyte, various studies have been conducted in terms of the material and shape of the electrolyte.
Korean Patent No. 1232607 relates to a polymer electrolyte membrane for a lithium secondary battery comprising an organic-inorganic hybrid copolymer, wherein the organic-inorganic hybrid copolymer can be polymerized by reversible addition fragmentation chain transfer polymerization (RAFT) to form a polymer electrolyte membrane.
In addition, Korean Laid-open Patent Publication No. 2017-0083387 relates to an electrolyte comprising a block copolymer, wherein the block copolymer can also be obtained by RAFT reaction.
The block copolymer is obtained by a reversible addition fragmentation chain transfer polymerization (RAFT)

reaction and discloses the use of a monomer, a chain transfer agent, an ionic liquid, a lithium salt, and an initiator as raw materials.

As described above, in recent years, attempts have been made to improve the physical properties of a polymer electrolyte membrane using a reversible addition fragmentation chain transfer polymerization (RAFT). However, the low ionic conductivity and the mobility of the electrolyte membrane itself, which are problems of the polymer electrolyte membrane, still remain to be improved.

[Prior Art Document]

(Patent Document 1) Korean Patent No. 1232607.
(Patent Document 2) Korean Patent Publication No. 2017-0083387.

[Disclosure]

[Technical Problem]

As a result of various studies to solve the above problems, the inventors of the present invention have manufactured a polymer electrolyte membrane using a reversible addition fragmentation chain transfer polymerization (RAFT) where the polymer electrolyte membrane is manufactured by using a RAFT agent containing a styrene functional group with C=C double bond and a Solvate ion liquid together. The polymer electrolyte membrane thus manufactured has excellent ionic conductivity and excellent mobility of the electrolyte membrane itself, and thus was found to be advantageous in improving the performance of the battery.

Therefore, it is an object of the present invention to provide a polymer electrolyte membrane according to claim 1 having excellent mobility and ionic conductivity.

In addition, it is still another object of the present invention to provide a method of manufacturing the polymer electrolyte membrane as described above.

[Technical Solution]

In order to achieve the above objects, the present invention provides a polymer electrolyte comprising a polymer comprising a monomer containing ethylene oxide (EO) repeating units; a reversible addition fragmentation chain transfer polymerization agent (RAFT agent) comprising styrene groups at respective ends thereof; and a solvate ionic liquid (SIL) containing (a) a lithium salt and (b) a glyme-based material or an amide-based material.

The polymer electrolyte contains 40 % by weight to 60 % by weight of the polymer; 3 % by weight to 10 % by weight of the RAFT agent; and 30 % by weight to 50 % by weight of the SIL.

The monomer containing the ethylene oxide repeating units may be at least one selected from the group consisting of poly(ethylene glycol) methyl ether acrylate (PEGMEA) and poly (ethylene glycol) methyl ether methacrylate (PEGMEMA).

The RAFT agent may comprise styrene functional group having C=C double bonds at respective ends thereof.

The RAFT agent may be crosslinked with the polymer.

In the solvate ionic liquid, the molar ratio of the lithium salt and the glyme-based material may be 1 : 0.1 to 3, and the molar ratio of the lithium salt and the amide-based material may be 1 : 1 to 6.

The glyme-based material may be at least one selected from the group consisting of monoglyme, diglyme, triglyme, and tetraglyme.

The lithium salt may be at least one selected from the group consisting of LiSCN, $LiN(CN)_2$, $LiClO_4$, $LiBF_4$, $LiAsF_6$, $LiPF_6$, $LiCF_3SO_3$, $LiN(SO_2F)_2$, $Li(CF_3SO_2)_3C$, $LiN(SO_2CF_3)_2$, $LiN(SO_2CF_2CF_3)_2$, $LiSbF_6$, $LiPF_3(C_2F_5)_3$, $LiPF_3(CF_3)_3$, and $LiB(C_2O_4)_2$.

The solvate ionic liquid may be impregnated inside the chain of the polymer or contained in a swollen form inside the chain of the polymer.

The polymer electrolyte may be a polymer electrolyte membrane in a network form.

The present invention also provides a method for manufacturing a polymer electrolyte comprising the steps of (S1) mixing a monomer containing ethylene oxide repeating units, a RAFT agent comprising styrene groups at respective ends thereof a solvate ionic liquid (SIL) containing a lithium salt and a glyme-based material or an amide-based material, and an initiator; (S2) removing oxygen from the mixed solution obtained in step (S1) above; and (S3) applying the mixed solution, from which oxygen has been removed in step (S2) above, to the substrate and curing it.

In step (S1) above, 40 to 60 % by weight of the monomer containing ethylene oxide repeating units; 3 to 10 % by

weight of the RAFT agent comprising styrene groups at respective ends thereof; 30 to 50 % by weight of the solvate ionic liquid (SIL) containing the lithium salt and the glyme-based material; and 0.1 to 1 % by weight of the initiator may be mixed.

In step (S3) above, the curing may be thermal-curing or photo-curing.

The present invention also provides a lithium secondary battery comprising the polymer electrolyte.

[Advantageous Effects]

The polymer electrolyte according to the present invention can be manufactured in the form of a polymer membrane having a network form that has a homogeneous and low crosslinking degree by RAFT polymerization using a RAFT agent, and thus can improve the phenomenon of the decrease of the mobility of the polymer chain and can solve the problem of the occurrence of leakage in assembling the battery using the conventional polymer electrolyte.

In addition, in the manufacture of the polymer electrolyte, a RAFT agent, into which a styrene functional group with C=C double bond is introduced at both ends, can play a role as a crosslinker and as a chain transfer agent at the same time.

Also, in the manufacture of the polymer electrolyte, ionic conductivity can be improved by using the solvate ionic liquid.

[Description of Drawings]

FIG. 1 is a schematic diagram of solvate ionic liquid according to one embodiment of the present invention.

FIG. 2 is a $^1$H-NMR spectrum of the reversible addition fragmentation chain transfer polymerization agent (RAFT agent) synthesized in Preparation Example 1 of the present invention.

FIG. 3a is a Differential Scanning Calorimeter (DSC) graph for the solvate ionic liquid (SIL) synthesized in Preparation Example 2 of the present invention, and FIG. 3b is a photograph showing the result of the ignition test on the solvate ionic liquid synthesized in Preparation Example 2 of the present invention.

FIG. 4 is a photograph showing a result of visually checking the form of the polymer electrolytes manufactured in Examples 1 and 3 of the present invention and Comparative Examples 1 and 2.

FIG. 5 is a graph showing the measurement results of the voltage stability of the polymer electrolyte manufactured in Example 3 of the present invention.

[Best Mode]

Hereinafter, the present invention will be described in detail in order to facilitate understanding of the present invention.

The terms and words used in the present specification and claims should not be construed as being limited to ordinary or dictionary terms, and should be construed in a sense and concept consistent with the technical idea of the present invention, based on the principle that the inventor can properly define the concept of a term to describe his invention in the best way.

**Polymer electrolyte**

The present invention relates to a polymer electrolyte prepared by a reversible addition fragmentation chain transfer polymerization (RAFT), which has a network form with homogeneous and low crosslinking degree and has high ionic conductivity.

The polymer electrolyte of the present invention comprises a polymer comprising a monomer containing ethylene oxide repeating units; a reversible addition fragmentation chain transfer polymerization agent (RAFT agent) into which a styrene group is introduced at both ends; and a solvate ionic liquid (SIL) containing a lithium salt and a glyme-based material or an amide-based material.

Specifically, the polymer electrolyte may comprise the SIL and a random copolymer comprising the repeating units having ethylene oxide and styrene.

The polymer comprising a monomer containing ethylene oxide repeating units is contained in an amount of 40 to 60% by weight, preferably 43 to 57% by weight, and more preferably 45 to 55% by weight, based on the total weight of the polymer electrolyte. If the amount is less than the above range, leakage may occur. If the amount is more than the above range, the ionic conductivity of the polymer electrolyte may be lowered.

In the present invention, the RAFT agent may function as a crosslinker and a chain transfer agent in the manufacture of the polymer electrolyte, thereby enabling the formation of a polymer electrolyte membrane having a network form with homogeneous and low crosslinking degree.

Specifically, the RAFT agent may be comprised in the polymer electrolyte in a state crosslinked with the polymer containing ethylene oxide monomer, thereby enabling the formation of a polymer electrolyte membrane having a network form with homogeneous and low crosslinking degree.

The RAFT agent is contained in an amount of 3 to 10% by weight, preferably 4 to 9% by weight, more preferably 5 to 8% by weight based on the total weight of the polymer electrolyte. If the amount is less than the above range, leakage may occur. If the amount is more than the above range, the ionic conductivity of the polymer electrolyte may be lowered.

Also, the RAFT agent may have a styrene functional group with C=C double bonds introduced at both ends. For example, the RAFT agent is 3,4-divinyl benzyl trithiocarbonate (DVBTC) represented by Formula 1

<Formula 1>

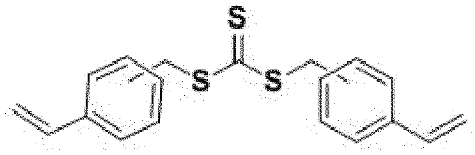

; and

In the present invention, the solvate ionic liquid (SIL) can function to improve the ionic conductivity of the polymer electrolyte.

The solvate ionic liquid may be impregnated inside the chain of the polymer containing the ethylene oxide repeating units or contained in a swollen form inside the chain of the polymer.

The solvate ionic liquid is contained in an amount of 30 to 50% by weight, preferably 30 to 45% by weight, and more preferably 30 to 40% by weight, based on the total weight of the polymer electrolyte. If the amount is less than the above range, leakage may occur. If the amount is more than the above range, the ionic conductivity of the polymer electrolyte may be lowered.

In addition, the solvate ionic liquid may contain the lithium salt and the glyme-based material, or may contain the lithium salt and the amide-based material.

If the solvate ionic liquid contains the lithium salt and the glyme-based material, the molar ratio of the glyme-based material and the lithium salt is 1 : 0.1 to 3, preferably 1 : 0.1 to 2, and more preferably 1 : 0.5 to 1.5. If the molar ratio of the glyme-based material to the lithium salt is less than or greater than the above range, the solvate ionic liquid cannot be formed.

The glyme-based material may be at least one selected from the group consisting of monoglyme, diglyme, triglyme, and tetraglyme. The glyme-based material contains oxygen to coordinate lithium salts.

The lithium salt may be at least one selected from the group consisting of LiSCN, $LiN(CN)_2$, $LiClO_4$, $LiBF_4$, $LiAsF_6$, $LiPF_6$, $LiCF_3SO_3$, $LiN(SO_2F)_2$, $Li(CF_3SO_2)_3C$, $LiN(SO_2CF_3)_2$, $LiN(SO_2CF_2CF_3)_2$, $LiSbF_6$, $LiPF_3(C_2F_5)_3$, $LiPF_3(CF_3)_3$, and $LiB(C_2O_4)_2$. Preferably, the lithium salt may be $LiN(SO_2F)_2$ or $LiN(SO_2CF_3)_2$, which may be more advantageous in improving ionic conductivity and mechanical properties of the polymer electrolyte.

FIG. 1 is a schematic diagram of solvate ionic liquid according to one embodiment of the present invention.

Referring to FIG. 1, the solvate ionic liquid improves the mobility of lithium ions by having a structure in which lithium (11) of the lithium salt is coordinated to the oxygen of the glyme-based material (10) and anion $X^-$(12) of lithium salt is present. At this time, $X^-$ can be, for example, fluorosulfonylimide ($FSI^-$) or (trifluoromethane)sulfonimide ($TFSI^-$).

In addition, FIG. 1 illustrates tetraethylene glycol dimethyl ether as an example of a glyme-based material. If such solvate ionic liquid is contained, it is possible to effectively prevent disturbance of the movement of lithium due to the excessive formation of coordination bonds between monomer polymer containing ethylene oxide repeating units and lithium ions, as compared to the case where the electrolyte does not contain solvate ionic liquid. As a result, as shown in FIG. 1, the electrochemical stability is excellent due to the coordination bond between lithium and glyme-based material, and the mobility of lithium ion on the surface of the lithium negative electrode can be improved to obtain an electrolyte having excellent ionic conductivity. In addition, the solvate ionic liquid is one of the Lewis bases and has excellent effects in stabilizing the surface of lithium metal and inhibiting the formation of lithium dendrite on the surface of lithium metal negative electrode.

In addition, if the solvate ionic liquid contains the lithium salt and the amide-based material, the molar ratio of the lithium salt and the amide-based material may be 1 : 1 to 6, preferably 1 : 2 to 6, and more preferably 1 : 3 to 5. If the molar ratio of the amide-based material to the lithium salt is less than or greater than the above range, the solvate ionic liquid cannot be formed.

The amide-based material may be at least one selected from the group consisting of N-methylacetamide (NMAC), acetamide, N-methylpropionamide, N-ethylacetamide, propionamide, formamide, N-methylformamide, N-ethylformamide, N,N-dimethylformamide, N,N-diethylformamide, N,N-dimethylacetamide and N,N-diethylacetamide, and preferably may be N-methylacetamide.

The polymer electrolyte according to the present invention may be a polymer electrolyte membrane in a network form.

Specifically, since radical formation is slow and uniform RAFT polymerization is performed as compared with free radical polymerization, a polymer electrolyte membrane having a network form with a homogeneous and low crosslinking degree can be formed.

## Manufacturing method of polymer electrolyte

The present invention also relates to a method for manufacturing a polymer electrolyte having a network form with a homogeneous and low crosslinking degree and having high ionic conductivity, using RAFT polymerization.

The method for manufacturing the polymer electrolyte according to the present invention may comprise the steps of (S1) mixing a monomer containing ethylene oxide repeating units, a RAFT agent comprising styrene groups at respective ends thereof, a solvate ionic liquid (SIL) containing a lithium salt and a glyme-based material or an amide-based material, and an initiator; (S2) removing oxygen from the mixed solution obtained in step (S1) above; and (S3) applying the mixed solution, from which oxygen has been removed in step (S2) above, to the substrate and curing it.

Hereinafter, a method for manufacturing the polymer electrolyte according to the present invention will be described in detail for each step.

Step (S1)

In step (S1), a monomer containing ethylene oxide repeating units; a RAFT agent comprising styrene groups at respective ends thereof; a solvate ionic liquid (SIL) containing a lithium salt and a glyme-based material or an amide-based material; and an initiator may be mixed.

The monomer containing the ethylene oxide repeating units may be at least one selected from the group consisting of poly(ethylene glycol) methyl ether acrylate (PEGMEA) and poly(ethylene glycol) methyl ether methacrylate (PEGMEMA), and preferably may be PEGMEA.

The monomer containing the ethylene oxide repeating units is mixed in an amount of 40 to 60% by weight, preferably 43 to 57% by weight, and more preferably 45 to 55% by weight, based on the total weight of the four mixed materials, i.e. the monomer containing ethylene oxide repeating units, the RAFT agent, the solvate ionic liquid containing the lithium salt and the glyme-based material, and the initiator. If the amount is less than the above range, leakage may occur. If the amount is more than the above range, the ionic conductivity of the polymer electrolyte may be lowered.

The functions, specific types, proper weight to be used when mixing, critical significance and characteristics of the RAFT agent and solvate ionic liquid are as described above.

The initiator may allow the RAFT polymerization reaction to commence.

The initiator may be at least one selected from the group consisting of azobis(isobutyronitrile) (AIBN), benzoyl peroxide, acetyl peroxide, dilauryl peroxide, di-tert-butylperoxide, t-butyl peroxy-2-ethyl-hexanoate, cumyl hydroperoxide, hydrogen peroxide, 2,2-azobis(2-cyanobutane), 2,2-azobis(methylbutyronitrile) and azobisdimethyl valeronitrile (AMVN), and preferably, may be azobis(isobutyronitrile) (AIBN).

The initiator may be mixed in an amount of 0.1 to 1% by weight, preferably 0.1 to 0.8% by weight, and more preferably 0.1 to 0.5% by weight, based on the total weight of the four mixed materials, i.e. the monomer containing ethylene oxide repeating units, the RAFT agent, the solvate ionic liquid containing the lithium salt and the glyme-based material, and the initiator. If the amount is less than the above range, the RAFT polymerization reaction may not be initiated, and even if the amount exceeds the above range, it does not cause the RAFT polymerization reaction to initiate more smoothly, so there is no benefit from exceeding the above range.

Step (S2)

In step (S2), oxygen can be removed from the mixed solution obtained in step (S1). Since oxygen plays a role of eliminating the radicals necessary for the polymerization reaction, it is preferable to remove oxygen from the mixed solution.

The method of removing oxygen may be a bubbling method or a freeze-pump-thaw method, and preferably oxygen may be removed by nitrogen bubbling.

Step (S3)

In step (S3), the mixed solution from which oxygen is removed in step (S2) may be applied on the substrate and cured.

The method of applying the oxygen-removed mixed solution onto the substrate may be selected from the group

consisting of spraying method, screen printing method, doctor blade method, and slot die method. There is no particular limitation as long as it is a method of applying a solution on a substrate, which can be used in the art.

After the application, the polymer electrolyte formed on the substrate, specifically, the polymer electrolyte membrane may be peeled off.

The substrate may preferably be a release film.

The release film is not particularly limited as long as it is a release film used in the art, and for example, the release film formed by polyester resins such as polyethylene terephthalate, polybutylene terephthalate, polyethylene naphthalate and polybutylene naphthalate; polyimide resin; acrylic resin; styrene resins such as polystyrene and acrylonitrile-styrene; polycarbonate resin; polylactic acid resin; polyurethane resin; polyolefin resins such as polyethylene, polypropylene, and ethylene-propylene copolymer; vinyl resins such as polyvinyl chloride and polyvinylidene chloride; polyamide resins; sulfonic resin; polyether-ether ketone resin; allylate-based resin; or a mixture thereof may be used.

The curing may be thermal-curing or photo-curing. The thermal-curing may be performed by heating to a temperature of 50 to 80 °C, preferably 55 to 75 °C, and more preferably 60 to 70 °C. If the above-mentioned thermal-curing temperature is lower than the above-mentioned range, the polymer electrolyte cannot be obtained because the curing is not performed as much as desired. If the thermal-curing temperature is higher than the above range, the physical properties of the polymer electrolyte itself may be denatured. The photo-curing may be UV curing.

**Lithium secondary battery**

The present invention also relates to a lithium secondary battery comprising the polymer electrolyte as described above.

The lithium secondary battery according to the present invention comprises a positive electrode, a negative electrode, and an electrolyte interposed therebetween, wherein the electrolyte may be the polymer electrolyte as described above.

The polymer electrolyte exhibits high lithium ion conductivity while satisfying both electrochemically excellent voltage stability and cation transportation rate, and thus can be preferably used as an electrolyte of the battery to improve the performance of the battery.

In addition, in order to further increase the lithium ion conductivity, the electrolyte may further comprise a substance used for this purpose.

If desired, the polymer electrolyte further comprises an inorganic solid electrolyte or an organic solid electrolyte. The inorganic solid electrolyte may be a ceramic material, which is a crystalline material or an amorphous material, and may be inorganic solid electrolytes such as thio-LISICON ($Li_{3.25}Ge_{0.25}P_{0.75}S_4$), $Li_2S$-$SiS_2$, LiI-$Li_2S$-$SiS_2$, LiI-$Li_2S$-$P_2S_5$, LiI-$Li_2S$-$P_2O_5$, LiI-$Li_3PO_4$-$P_2S_5$, $Li_2S$-$P_2S_5$, $Li_3PS_4$, $Li_7P_3S_{11}$, $Li_2O$-$B_2O_3$, $Li_2O$-$B_2O_3$-$P_2O_5$, $Li_2O$-$V_2O_5$-$SiO_2$, $Li_2O$-$B_2O_3$, $Li_3PO_4$, $Li_2O$-$Li_2WO_4$-$B_2O_3$, LiPON, LiBON, $Li_2O$-$SiO_2$, LiI, $Li_3N$, $Li_5La_3Ta_2O_{12}$, $Li_7La_3Zr_2O_{12}$, $Li_6BaLa_2Ta_2O_{12}$, $Li_3PO_{(4-3/2w)}$Nw (wherein w<1), $Li_{3.6}Si_{0.6}P_{0.4}O_4$.

Examples of the organic solid electrolyte may be organic solid electrolytes prepared by mixing lithium salt to polymeric materials such as polyethylene derivatives, polyethylene oxide derivatives, polypropylene oxide derivatives, phosphate ester polymers, polyalginate lysine, polyester sulfide, polyvinyl alcohol, and polyvinylidene fluoride. In this case, these may be used alone or in combination of at least one.

The specific application method of the polymer electrolyte is not particularly limited in the present invention, and can be selected from methods known to those skilled in the art.

The lithium secondary battery to which the polymer electrolyte can be applied as an electrolyte has no limitations on positive or negative electrodes, and especially is applicable to lithium-air battery, lithium oxide battery, lithium-sulfur battery, lithium metal battery, and all-solid-state battery which operate at high temperature.

The positive electrode of the lithium secondary battery may comprise, but is not limited to, a layered compound such as lithium cobalt oxide($LiCoO_2$) and lithium nickel oxide ($LiNiO_2$), or a compound substituted by one or more transition metals; lithium manganese oxide such as $LiMnO_3$, $LiMn_2O_3$, $LiMnO_2$ represented by chemical formula of $Li_{1+x}Mn_{2-x}O_4$ ($0 \leq x \leq 0.33$); lithium copper oxide ($Li_2CuO_2$); vanadium oxide such as $LiV_3O_8$, $LiFe_3O_4$, $V_2O_5$, $Cu_2V_2O_7$; Ni-site lithium nickel oxide represented by chemical formula of $LiNi_{1-x}M_xO_2$ (M = Co, Mn, Al, Cu, Fe, Mg, B or Ga; $0.01 \leq x \leq 0.3$); lithium manganese composite oxide represented by chemical formula of $LiMn_{2-x}M_xO_2$ (M = Co, Ni, Fe, Cr, Zn or Ta; $0.01 \leq x \leq 0.1$) or $Li_2Mn_3MO_8$ (M = Fe, Co, Ni, Cu or Zn); lithium manganese complex oxide of spinel structure represented by $LiNi_xMn_{2-x}O_4$; $LiMn_2O_4$ in which a portion of Li in the chemical formula is replaced by an alkaline earth metal ion; disulfide compound; chalcogenide such as $Fe_2(MoO_4)_3$, $Cu_2Mo_6S_8$, FeS, CoS and MiS, oxides, sulfides or halides of scandium, ruthenium, titanium, vanadium, molybdenum, chromium, manganese, iron, cobalt, nickel, copper, zinc and the like, and more specifically may comprise $TiS_2$, $ZrS_2$, $RuO_2$, $Co_3O_4$, $Mo_6S_8$, $V_2O_5$ or the like.

This positive electrode active material can be formed on a positive electrode current collector. The positive electrode current collector is not particularly limited as long as it has high conductivity without causing chemical change in the battery. For example, stainless steel, aluminum, nickel, titanium, sintered carbon; aluminum or stainless steel surface-treated with carbon, nickel, titanium, silver or the like may be used as the positive electrode current collector. At this time, the positive electrode current collector may be formed in various forms such as film having fine irregularities on its surface, sheet, foil, net, porous body, foam, or nonwoven fabric to enhance the bonding force with the positive electrode active material.

In addition, the negative electrode is manufactured by forming a negative electrode mixture layer with a negative electrode active material on the negative electrode current collector, or may be a negative electrode mixture layer (for example, lithium foil) alone.

At this time, the types of the negative electrode current collector and the negative electrode mixture layer are not particularly limited in the present invention, and known materials can be used.

In addition, the negative electrode current collector is not particularly limited as long as it has electrical conductivity without causing a chemical change in the battery. For example, copper, stainless steel, aluminum, nickel, titanium, sintered carbon, copper or stainless steel surface-treated with carbon, nickel, titanium, silver or the like; aluminum-cadmium alloy or the like may be used as the negative electrode current collector. Also, as with the positive electrode current collector, the shape of the negative electrode current collector can be various forms such as a film having fine irregularities on its surface, sheet, foil, net, porous body, foam, nonwoven fabric and the like.

In addition, the negative electrode active material may comprises, but is not limited to, at least one carbon-based material selected from the group consisting of crystalline artificial graphite, crystalline natural graphite, amorphous hard carbon, low crystalline soft carbon, carbon black, acetylene black, Ketjen black, Super-P, graphene, and fibrous carbon, Si-based material, metal composite oxides such as $LixFe_2O_3(0\leq x\leq 1)$, $Li_xWO_2(0\leq x\leq 1)$, $Sn_xMe_{1-x}Me'_yO_z$ (Me: Mn, Fe, Pb, Ge; Me': Al, B, P, Si, elements of groups 1, 2, and 3 of the periodic table, halogen; $0<x\leq 1$; $1\leq y\leq 3$; $1\leq z\leq 8$); lithium metal; lithium alloy; silicon-based alloy; tin-based alloy; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$; an electrical conductivity polymer such as polyacetylene; Li-Co-Ni based material; titanium oxide; lithium titanium oxide.

In addition, the negative electrode active material may be metal composite oxides such as $Sn_xMe_{1-x}Me'_yO_z$ (Me: Mn, Fe, Pb, Ge; Me': Al, B, P, Si, elements of groups 1, 2, and 3 of the periodic table, halogen; $0<x\leq 1$; $1\leq y\leq 3$; $1\leq z\leq 8$); oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$, and carbon-based negative electrode active materials such as crystalline carbon, amorphous carbon, or carbon composite may be used alone or in combination of two or more.

At this time, the electrode material mixture layer may further include a binder resin, an electrically conductive material, a filler, and other additives.

The binder resin is used for the bonding of the electrode active material and the electrically conductive material and for the bonding to the current collector. Examples of such binder resins may comprise polyvinylidene fluoride (PVDF), polyvinyl alcohol, carboxymethylcellulose (CMC), starch, hydroxypropyl cellulose, regenerated cellulose, polyvinyl pyrrolidone, tetrafluoroethylene, polyethylene, polypropylene, ethylene-propylene-diene polymer (EPDM), sulfonated-EPDM, styrene-butadiene rubber, fluorine rubber, and various copolymers thereof.

The electrically conductive material is used to further improve the electrical conductivity of the electrode active material. The electrically conductive material is not particularly limited as long as it has electrical conductivity without causing chemical changes in the battery, and for example, graphite such as natural graphite or artificial graphite; carbon blacks such as carbon black, acetylene black, Ketjen black, channel black, furnace black, lamp black, and thermal black; electrically conductive fibers such as carbon fiber and metal fiber; carbon fluoride; metal powders such as aluminum powder and nickel powder; electrically conductive whiskers such as zinc oxide and potassium titanate; electrically conductive metal oxides such as titanium oxide; polyphenylene derivative can be used.

The filler is selectively used as a component for suppressing the expansion of the electrode and is not specifically limited as long as it is a fibrous material without causing chemical change in the battery, and for example, includes olefin-based polymers such as polyethylene and polypropylene; and fibrous materials such as glass fiber and carbon fiber.

The shape of the lithium secondary battery as described above is not particularly limited and may be, for example, a jelly-roll type, a stack type, a stack-folding type (comprising a stack-Z-folding type), or a lamination-stacking type, and preferably a stack-folding type.

The electrode assembly in which the negative electrode, polymer electrolyte, and the positive electrode are sequentially stacked is prepared, and the electrode assembly is inserted into the battery case, and then sealed with cap plate and gasket to obtain the lithium secondary battery.

In this case, the lithium secondary battery can be classified into various types of batteries such as lithium-sulfur battery, lithium-air battery, lithium-oxide battery, and lithium all-solid-state battery depending on the type of positive electrode/negative electrode materials used, can be classified into cylindrical, rectangular, coin-shaped, pouch type depending on the type, and can be divided into bulk type and thin film type depending on the size. The structure and preparing method of these batteries are well known in the art, and thus detailed description thereof is omitted.

The lithium secondary battery according to the present invention can be used as a power source for devices requiring high capacity and high rate characteristics, etc. Specific examples of the device may comprise, but are not limited

to, a power tool that is powered by a battery powered motor; electric cars comprising an electric vehicle (EV), a hybrid electric vehicle (HEV), a plug-in hybrid electric vehicle (PHEV), and the like; an electric motorcycle comprising an electric bike (E-bike) and an electric scooter (Escooter); an electric golf cart; and a power storage system.

Hereinafter, preferred examples of the present invention will be described in order to facilitate understanding of the present invention. It will be apparent to those skilled in the art, however, that the following examples are illustrative of the present invention and that various changes and modifications can be made within the scope of the present invention. Such variations and modifications are within the scope of the appended claims.

In the following examples and comparative examples, polymer electrolytes were manufactured according to the composition as set forth in Table 1 below.

Table 1:

| (unit: % by weight) | Monomer | RAFT agent (Preparation Example1) | SIL (Preparation Example 2) | | Initiator | Curing method |
|---|---|---|---|---|---|---|
| | PEGMEA | DVBTC | NMAC | LiTFSI | | |
| Example 1 | 54.74 | 4.97 | 20.09 | 19.72 | 0.48 (AIBN) | Thermal curing |
| Example 2 | 57.42 | 3.93 | 19.31 | 18.96 | 0.38(Irga cure 819) | Photo-curing |
| Example 3 | 58.68 | 2.01 | 19.74 | 19.37 | 0.19(Irga cure 819) | Photo-curing |
| Comparative Example 1 | 57.74 | 4.98 (2-(dodecylthio carbonothioy lthio)-2-methylpropio nic acid) | 20.09 | 19.72 | 0.48 (Irgacure 819) | Photo-curing |
| Comparative Example 2 | 48.32(PEO) | - | 20.18 | 31.49 | - | - |

**Preparation** Example 1: Synthesis of RAFT **agent**

**(1) Synthesis** of RAFT **agent**

3,4-divinylbenzyl trithiocarbonate (DVBTC), a RAFT agent, was synthesized according to Reaction Scheme 1 below.

<Reaction Scheme 1>

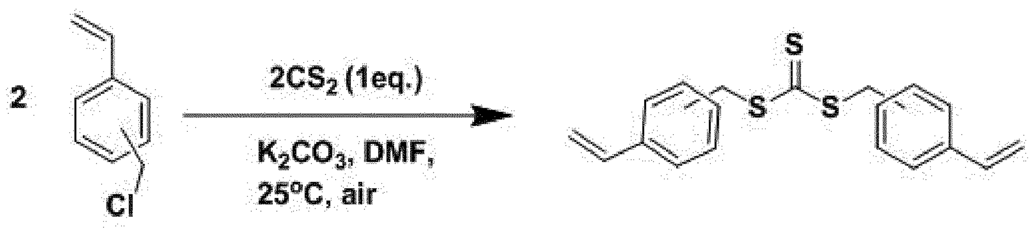


VBC DVBTC

In a 250 mL round bottom flask, carbon disulfide ($CS_2$, Sigma-Aldrich, 3.81 g) and potassium carbonate ($K_2CO_3$, DaeJungWhaGeum, 7.26 g) were dissolved in 100 mL of dimethylformamide (DMF, Sigma-Aldrich, 100 mL) and stirring was continued for 30 minutes to obtain a solution.

To the obtained solution, 3,4-vinylbenzyl chloride (VBC, Sigma-Aldrich, 7.63 g) was added dropwise and the reaction was carried out at 40 °C for 24 hours while stirring.

The solution with undergoing the reaction was placed in an excess amount of deionized water (DI water) stored in the refrigerator to terminate the reaction.

The reaction terminated solution was mixed with 300 mL of ethyl acetate (EtAC, Sigma-Aldrich), and then the

yellow reactant of the EtAC layer was collected using a separation funnel, and residual water was removed using magnesium sulfate ($MgSO_4$).

Thereafter, the reactant was separated by filtration, the EtAc was removed using a rotary evaporator, and then the residual solvent was removed by vacuum drying (room temperature, 24 hours).

Additional purification was carried out through a silica gel column to obtain 3,4-divinylbenzyl trithiocarbonate (DVBTC) (RAFT agent) in the form of a yellow oil.

(2) Identification of synthetic material

FIG. 2 is a $^1$H-NMR spectrum of the reversible addition fragmentation chain transfer polymerization agent (RAFT agent) synthesized in Preparation Example 1 of the present invention.

Referring to FIG. 2, it can be seen that in Preparation Example 1, a DVBTC as shown in Reaction Scheme 1 is synthesized as a RAFT agent.

**Preparation Example 2: Synthesis of Solvate Ionic Liquid (SIL)**

**(1) Synthesis of SIL (Li[NMAC][TFSI])**

After mixing N-methylacetamide (NMAC, Sigma-Aldrich) and bis(trifluoromethane)sulfonimide lithium salt (LiTFSI, Sigma-Aldrich) vacuum-dried at 100 °C for 24 hours in a ratio of 50.46% by weight and 49.54% by weight, respectively, the mixture was stirred in a glove box at room temperature for 4 hours to synthesize the solvate ionic liquid (Li [NMAC] [TFSI], 1.9M) represented by the following Formula 3.

<Formula 3>

Li[NMAC][TFSI]

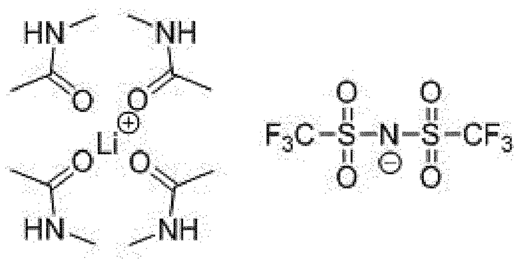

**(2) Confirmation of physical properties of synthesized SIL (Li [NMAC] [TFSI])**

**(2-1) Phase identification of SIL (Li[NMAC][TFSI])**

As a result of visual observation of the synthesized SIL (Li[NMAC][TFSI]), it was confirmed that NMAC existing in crystal form at 25 °C exists in the form of LiTFSI and ionic liquid, and changes to a liquid phase in SIL.

**(2-2) Confirmation of thermal stability**

A Differential Scanning Calorimeter (DSC) was measured to confirm the thermal stability of synthesized SIL (Li [NMAC] [TFSI]) .

FIG. 3a is a DSC graph for the solvate ionic liquid (SIL) synthesized in Preparation Example 2 of the present invention.

Referring to FIG. 3a, no phase change of the synthesized SIL (Li[NMAC][TFSI]) occurred during the measurement of DSC over -50 °C to 100 °C, and from this, it was confirmed that the thermal stability was excellent.

**(2-3) Confirmation of flame retardancy**

Experiments were conducted to confirm the flame retardancy of the synthesized SIL (Li[NMAC][TFSI]).

FIG. 3b is a photograph showing the result of the ignition test on the solvate ionic liquid synthesized in Preparation Example 2 of the present invention.

Referring to FIG. 3b, the synthesized SIL (Li[NMAC][TFSI]) was not ignited during the ignition experiment using the torch, and from this, it was confirmed that the flame retardancy was excellent.

**Example 1**

**(1) Mixing of raw materials**

Poly(ethylene glycol) methyl ether acrylate (PEGMEA, Sigma-Aldrich, Mn: 480) as a monomer; DVBTC synthesized in Preparation Example 1 as a RAFT agent; SIL synthesized to include NMAC and LiTFSI according to the same method as Preparation Example 2; and azobis(isobutyronitrile) (AIBN) as an initiator according to the composition shown in Table 1 were weighed in a reaction vial of 20 mL to have a total of 2 g, and mixed using a vortex for 1 minute, so that the initiator could be completely dissolved, to prepare a mixed solution. At this time, the SIL was synthesized according to the same method as Preparation Example 2, wherein the SIL is synthesized so as to satisfy the composition ratio as set forth in Table 1

**(2) Removal of oxygen**

The mixed solution was bubbled with nitrogen for 2 minutes to remove residual oxygen from the mixed solution.

**(3) Curing**

The mixed solution from which the residual oxygen was removed was applied onto a release film (polyester film (SKC, SH71S, 100 μm)) using a pipette and thermal-cured.

The thermal-curing method was performed in two steps as described below.

- Step 1: The hot plate in the glove box was heated to a temperature of 65 °C, and then the mixed solution was applied onto the release film using a pipette.
- Step 2: The above-described release film was used to uniformly spread the mixed solution, and thermal-curing was performed for 24 hours.

After the curing was completed, the polymer electrolyte membrane was peeled from the release film.

In Example 1, the polymerization reaction in the manufacture of the polymer electrolyte is as shown in the following Reaction Scheme 2. In the following Reaction Scheme 2, the polymerized polymer electrolyte is shown as a schematic representation of the crosslinked form of PEGMEA (-) and RAFT agent (---).

<Reaction Scheme 2>

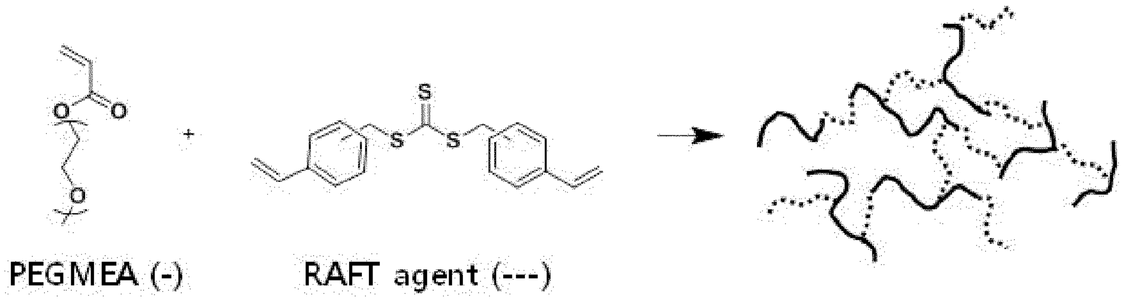

PEGMEA (-) RAFT agent (---)

**Example 2**

The same procedure as in Example 1 was carried out, except that a polymer electrolyte was manufactured according to the composition as shown in Table 1 above using a photo-curing method. At this time, the SIL was synthesized according to the same method as Preparation Example 2, except that the SIL was synthesized so as to satisfy the composition ratio as shown in Table 1 above.

The photo-curing method was performed in two steps as described below.

- Step 1: The mixed solution was applied onto the release film using a pipette, and then the mixed solution was caused to uniformly spread on the release film.

- Step 2: The release film coated with the mixed solution was placed in a UV black light chamber and subjected to UV curing for one hour.

**Example 3**

The same procedure as in Example 2 was carried out, except that a polymer electrolyte was manufactured according to the composition as described in Table 1 above. At this time, the SIL was synthesized according to the same method as Preparation Example 2, except that the SIL was synthesized so as to satisfy the composition ratio as described in Table 1 above.

**Comparative Example 1**

The same procedure as in Example 1 was carried out, except that a polymer electrolyte was manufactured by photo-curing method using 2-(dodecylthiocarbonothioylthio)-2-methylpropionic acid (Sigma-Aldrich) as a RAFT agent, which is not crosslinkable. At this time, the SIL was synthesized according to the same method as Preparation Example 2, except that the SIL was synthesized so as to satisfy the composition ratio as described in Table 1 above.
In Comparative Example 1, the reaction in the manufacture of the polymer electrolyte is as shown in Reaction Scheme 3 below.

<Reaction Scheme 3>

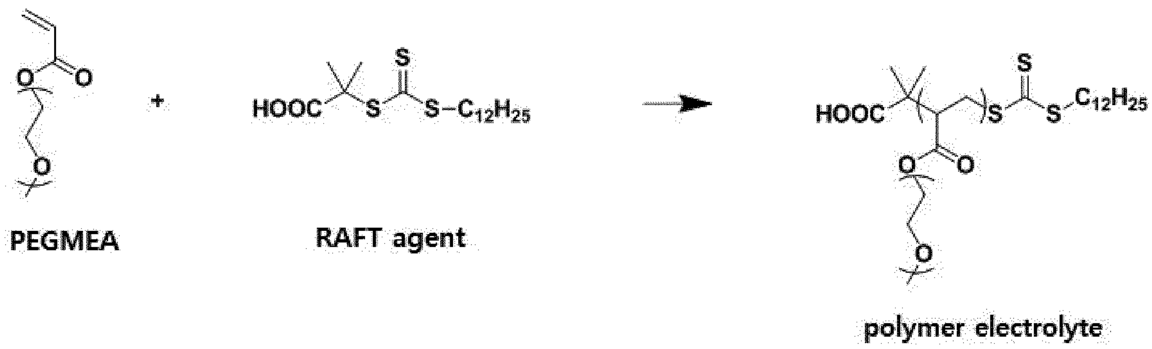
PEGMEA
RAFT agent
polymer electrolyte

**Comparative Example** 2

Poly(ethylene oxide) having molecular weight of 1,000,000 (PEO, Sigma-Aldrich), NMAC, and LiTFSI were dissolved in acetonitrile (Sigma-Aldrich) to have a solid content of 10% by weight, and then solution casting was performed to prepare a polymer electrolyte membrane. At this time, the SIL was synthesized according to the same method as Preparation Example 2, except that the SIL was synthesized so as to satisfy the composition ratio as described in Table 1 above.

**Experimental Example 1**

The ionic conductivity, voltage stability, and cation transportation rate of the polymer electrolytes prepared in examples and comparative examples were measured and evaluated as follows.

**(1) <u>Ionic conductivity (σ)</u>**

After manufacturing a coin cell in the form of Steel Use Stainless (SUS)/polymer electrolyte/SUS, the ionic conductivity was measured by using a potentiostat, wherein the ionic conductivity was measured by applying a voltage of 10 mV in the range of 1 Hz to 5 MHz at 25 °C.
The form of the polymer electrolyte was visually observed, and the results are shown in Table 2 below.

Table 2:

| | σ (S/cm) | Form of polymer electrolyte |
|---|---|---|
| Example 1 | $4.5 \times 10^{-5}$ | Free-standing film |

(continued)

| | σ (S/cm) | Form of polymer electrolyte |
|---|---|---|
| Example 2 | $1.9 \times 10^{-4}$ | Free-standing film |
| Example 3 | $2.1 \times 10^{-4}$ | Free-standing film |
| Comparative Example 1 | - | Non-crosslinked polymer electrolyte (viscous liquid form) |
| Comparative Example 2 | $1.8 \times 10^{-5}$ | Free-standing film |

Referring to Table 2 above, it can be seen that the polymer electrolytes of Examples 1 to 3 exhibit superior ionic conductivity as compared to Comparative Examples 1 and 2.

In addition, it can be seen that since the polymer electrolytes of Examples 1 to 3 have the form of a free-standing film in which the film itself can be handled, the polymer electrolyte membranes of network form are formed. On the other hand, it was confirmed that in Comparative Example 1, the polymer electrolyte manufactured by using a non-crosslinkable RAFT agent was manufactured in the form of a non-crosslinked viscous liquid.

FIG. 4 is a photograph showing a result of visually checking the form of the polymer electrolytes manufactured in Examples 1 and 3 of the present invention and Comparative Examples 1 and 2.

Referring to FIG. 4, it can be seen that Examples 1 and 3 and Comparative Example 2 are in the form of a polymer electrolyte membrane, and Comparative Example 1 is in the form of a viscous liquid without forming a polymer electrolyte membrane.

**(2) Voltage stability**

After manufacturing a coin cell in the form of Li metal/polymer electrolyte/SUS, the voltage stability was measured by using a potentiostat, wherein the voltage stability was measured at a scan rate of 5 mV/s in the range of -0.5 to 8V.

FIG. 5 is a graph showing the measurement results of the voltage stability of the polymer electrolyte manufactured in Example 3 of the present invention.

Referring to FIG. 5, it can be seen that the oxidation of the polymer electrolyte of Example 3 occurs at a level of 4.2 V and thus the voltage stability is excellent.

**(3) Cation transportation rate**

After manufacturing a coin cell in the form of Li metal/polymer electrolyte/Li metal, the cation transportation rate was obtained by applying a voltage of 10 mV and measuring the current change over 20 hours. The cation transportation rate ($t_{Li^+}$) was calculated by the ratio of the steady state current ($I^s$) and the initial current amount ($I^0$) according to the following Equation (1).

<Equation 1>

$$t_{Li^+} = \frac{I^S}{I^0}$$

According to Equation 1, the cation transportation rate of the polymer electrolyte prepared in Example 3 is 0.39.

While the present invention has been described with reference to exemplary examples and drawings, the present invention is not limited thereto. It will be understood by those skilled in the art that various changes in form and details may be made therein without departing from the scope of the present invention as defined by the appended claims.

[Description of Symbols]

10: Glyme-based material
11: Lithium of lithium salt
12: Anion of lithium salt

## Claims

1. A polymer electrolyte, comprising:

   a polymer comprising a monomer comprising ethylene oxide (EO) repeating units;
   a reversible addition fragmentation chain transfer polymerization agent (RAFT agent) comprising styrene groups at respective ends thereof; and
   a solvate ionic liquid (SIL) comprising (a) a lithium salt and (b) a glyme-based material or an amide-based material; wherein the polymer is present in an amount of 40 % by weight to 60 % by weight;
   the RAFT agent is present in an amount of 3 % by weight to 10 % by weight; and
   the SIL is present in an amount of 30 % by weight to 50 % by weight.

2. The polymer electrolyte according to claim 1, wherein the monomer comprising the ethylene oxide repeating units is at least one selected from the group consisting of poly(ethylene glycol) methyl ether acrylate (PEGMEA) and poly(ethylene glycol) methyl ether methacrylate (PEGMEMA).

3. The polymer electrolyte according to claim 1, wherein the RAFT agent comprises styrene functional group having C=C double bonds at respective ends thereof.

4. The polymer electrolyte according to claim 1, wherein the RAFT agent is 3,4-divinylbenzyl trithiocarbonate (DVBTC) represented by Formula 1 below:

<Formula 1>

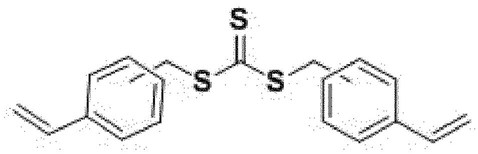

.

5. The polymer electrolyte according to claim 1, wherein the RAFT agent is crosslinked with the polymer.

6. The polymer electrolyte according to claim 1, wherein in the SIL, a molar ratio of the lithium salt and the glyme-based material is 1 : 0.1 to 3, or a molar ratio of the lithium salt and the amide-based material is 1 : 1 to 6.

7. The polymer electrolyte according to claim 6, wherein the glyme-based material is at least one selected from the group consisting of monoglyme, diglyme, triglyme, and tetraglyme.

8. The polymer electrolyte according to claim 6, wherein the amide-based material is at least one selected from the group consisting of N-methylacetamide (NMAC), acetamide, N-methylpropionamide, N-ethylacetamide, propionamide, formamide, N-methylformamide, N-ethylformamide, N,N-dimethylformamide, N,N-diethylformamide, N,N-dimethylacetamide, and N,N-diethylacetamide.

9. The polymer electrolyte according to claim 6, wherein the lithium salt is at least one selected from the group consisting of LiSCN, $LiN(CN)_2$, $LiClO_4$, $LiBF_4$, $LiAsF_6$, $LiPF_6$, $LiCF_3SO_3$, LiN $(SO_2F)_2$, $Li(CF_3SO_2)_3C$, LiN $(SO_2CF_3)_2$, LiN $(SO_2CF_2CF_3)_2$, $LiSbF_6$, $LiPF_3(C_2F_5)_3$, $LiPF_3(CF_3)_3$, and $LiB(C_2O_4)_2$.

10. The polymer electrolyte according to claim 1, wherein the SIL is impregnated inside a chain of the polymer or contained in a swollen form inside the chain of the polymer.

11. The polymer electrolyte according to claim 1, wherein the polymer electrolyte is a polymer electrolyte membrane in a form of a network.

12. A method for manufacturing a polymer electrolyte according to claim 1 comprising the steps of:

(S1) mixing

a monomer comprising ethylene oxide (EO) repeating units,
a reversible addition fragmentation chain transfer polymerization agent (RAFT agent) comprising styrene groups at respective ends thereof,
a solvate ionic liquid (SIL) comprising (a) a lithium salt and (b) a glyme-based material or an amide-based material, and
an initiator,
to prepare a mixed solution;

(S2) removing oxygen from the mixed solution obtained in step (S1) above; and
(S3) applying the mixed solution, from which oxygen has been removed in step (S2) above, to a substrate and curing the result.

**13.** The method for manufacturing the polymer electrolyte according to claim 12, wherein in step (S1), 40 % by weight to 60 % by weight of the monomer containing EO repeating units; 3 % by weight to 10 % by weight of the RAFT agent; 30 % by weight to 50 % by weight of the SIL; and 0.1 % by weight to 1 % by weight of the initiator are mixed.

**14.** A lithium secondary battery comprising the polymer electrolyte of any one of claims 1 to 11.

**Patentansprüche**

**1.** Polymerelektrolyt, umfassend:

ein Polymer, umfassend ein Monomer, das Ethylenoxid (EO)-Wiederholungseinheiten umfasst;
ein Reversibles Additions-Fragmentierungs-Kettenübertragungspolymerisationsmittel (RAFT-Mittel), umfassend Styrolgruppen an den jeweiligen Enden hiervon; und
eine ionische Solvatflüssigkeit (SIL), umfassend (a) ein Lithiumsalz und (b) ein Material auf Glyme-Basis oder ein Material auf Amid-Basis; worin das Polymer in einer Menge von 40 Gew.-% bis 60 Gew.-% vorliegt;
das RAFT-Mittel in einer Menge von 3 Gew.-% bis 10 Gew.-% vorliegt; und
die SIL in einer Menge von 30 Gew.-% bis 50 Gew.-% vorliegt.

**2.** Polymerelektrolyt gemäß Anspruch 1, worin das Monomer, das die Ethylenoxid-Wiederholungseinheiten umfasst, zumindest eines ist, das ausgewählt ist aus der Gruppe bestehend aus Poly(ethylenglykol)methyletheracrylat (PEGMEA) und Poly(ethylenglykol)methylethermethacrylat (PEGMEMA).

**3.** Polymerelektrolyt gemäß Anspruch 1, worin das RAFT-Mittel funktionelle Styrolgruppen mit C=C-Doppelbindungen an den jeweiligen Enden hiervon umfasst.

**4.** Polymerelektrolyt gemäß Anspruch 1, worin das RAFT-Mittel 3,4-Divinylbenzyltrithiocarbonat (DVBTC) ist, dargestellt durch die nachstehende Formel 1:

<Formel 1>

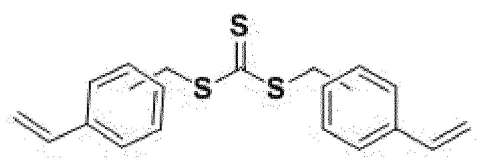

.

**5.** Polymerelektrolyt gemäß Anspruch 1, worin das RAFT-Mittel mit dem Polymer vernetzt ist.

**6.** Polymerelektrolyt gemäß Anspruch 1, worin in der SIL das molare Verhältnis des Lithiumsalzes zum Material auf Glyme-Basis 1 : 0,1 bis 3 beträgt oder das molare Verhältnis des Lithiumsalzes zum Material auf Amid-Basis 1 : 1 bis 6 beträgt.

7. Polymerelektrolyt gemäß Anspruch 6, worin da Material auf Glyme-Basis zumindest eines ist, das ausgewählt ist aus der Gruppe bestehend aus Monoglyme, Diglyme, Triglyme und Tetraglyme.

8. Polymerelektrolyt gemäß Anspruch 6, worin das Material auf Amid-Basis zumindest eines ist, das ausgewählt ist aus der Gruppe bestehend aus N-Methylacetamid (NMAC), Acetamid, N-Methylpropionamid, N-Ethylacetamid, Propionamid, Formamid, N-Methylformamid, N-Ethylformamid, N,N-Dimethylformamid, N,N-Diethylformamid, N,N-Dimethylacetamid und N,N-Diethylacetamid.

9. Polyelektrolyt gemäß Anspruch 6, worin das Lithiumsalz zumindest eines ist, das ausgewählt ist aus der Gruppe bestehend aus LiSCN, $LiN(CN)_2$, $LiClO_4$, $LiBF_4$, $LiAsF_6$, $LiPF_6$, $LiCF_3SO_3$, $LiN(SO_2F)_2$, $Li(CF_3SO_2)_3C$, $LiN(SO_2CF_3)_2$, $LiN(SO_2CF_2CF_3)_2$, $LiSbF_6$, $LiPF_3(C_2F_5)_3$, $LiPF_3(CF_3)_3$ und $LiB(C_2O_4)_2$.

10. Polymerelektrolyt gemäß Anspruch 1, worin die SIL innerhalb einer Kette des Polymers imprägniert ist oder in einer gequollenen Form innerhalb der Kette des Polymers enthalten ist.

11. Polymerelektrolyt gemäß Anspruch 1, worin der Polymerelektrolyt eine Polymerelektrolytmembran in Form eines Netzwerks ist.

12. Verfahren zur Herstellung eines Polymerelektrolyten gemäß Anspruch 1, umfassend die Schritte:

(S1) Mischen

eines Monomers, das Ethylenoxid (EO)-Wiederholungseinheiten umfasst,
eines Reversiblen Additions-Fragmentierungs-Kettenübertragungspolymerisationsmittels (RAFT-Mittels), das Styrolgruppen an den jeweiligen Enden hiervon umfasst;
einer ionischen Solvatflüssigkeit (SIL), umfassend (a) ein Lithiumsalz und (b) ein Material auf Glyme-Basis oder ein Material auf Amid-Basis, und
eines Initiators,
um eine gemischte Lösung herzustellen;

(S2) Entfernen von Sauerstoff aus der im vorstehenden Schritt (S1) erhaltenen gemischten Lösung; und
(S3) Auftragen der gemischten Lösung, aus der im vorstehenden Schritt (S2) Sauerstoff entfernt worden ist, auf ein Substrat und Härten des Resultierenden.

13. Verfahren zur Herstellung des Polymerelektrolyten gemäß Anspruch 12, worin in Schritt (S1) 40 Gew.-% bis 60 Gew.-% des Monomers, enthaltend EO-Wiederholungseinheiten; 3 Gew.-% bis 10 Gew.-% des RAFT-Mittels; 30 Gew.-% bis 50 Gew.-% der SIL; und 0,1 Gew.-% bis 1 Gew.-% des Initiators gemischt werden.

14. Lithium-Sekundärbatterie, umfassend den Polymerelektrolyten gemäß irgendeinem der Ansprüche 1 bis 11.

**Revendications**

1. Électrolyte polymère, comprenant :

un polymère comprenant un monomère comprenant des unités de répétition d'oxyde d'éthylène (EO) ;
un agent de polymérisation par transfert de chaîne réversible par addition-fragmentation (agent RAFT) comprenant des groupes styrène à ses extrémités respectives ; et
un liquide ionique de solvate (SIL) comprenant (a) un sel de lithium et (b) un matériau à base de glyme ou un matériau à base d'amide ; dans lequel le polymère est présent en une quantité de 40 % en poids à 60 % en poids ;
l'agent RAFT est présent en une quantité de 3 % en poids à 10 % en poids ; et
le SIL est présent en une quantité de 30 % en poids à 50 % en poids.

2. Électrolyte polymère selon la revendication 1, dans lequel le monomère comprenant les unités de répétition d'oxyde d'éthylène est au moins un choisi parmi le groupe constitué de poly(éthylène glycol) méthyl éther acrylate (PEGMEA) et poly(éthylène glycol) méthyl éther méthacrylate (PEGMEMA).

3. Électrolyte polymère selon la revendication 1, dans lequel l'agent RAFT comprend un groupe fonctionnel styrène

ayant des doubles liaisons C=C à ses extrémités respectives.

**4.** Électrolyte polymère selon la revendication 1, dans lequel l'agent RAFT est le trithiocarbonate de 3,4-divinylbenzyle (DVBTC) représenté par la formule 1 ci-dessous :

<Formule 1>

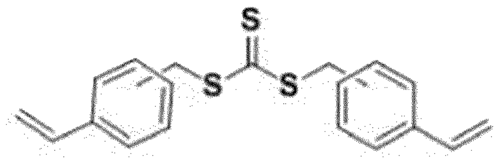

**5.** Électrolyte polymère selon la revendication 1, dans lequel l'agent RAFT est réticulé avec le polymère.

**6.** Électrolyte polymère selon la revendication 1, dans lequel dans le SIL, un rapport molaire du sel de lithium et du matériau à base de glyme est de 1 : 0,1 à 3, ou un rapport molaire du sel de lithium et du matériau à base d'amide est de 1 : 1 à 6.

**7.** Électrolyte polymère selon la revendication 6, dans lequel le matériau à base de glyme est au moins un choisi parmi le groupe constitué de monoglyme, diglyme, triglyme et tétraglyme.

**8.** Électrolyte polymère selon la revendication 6, dans lequel le matériau à base d'amide est au moins un choisi parmi le groupe constitué de N-méthylacétamide (NMAC), acétamide, N-méthylpropionamide, N-éthylacétamide, propionamide, formamide, N-méthylformamide, N-éthylformamide, N,N-diméthylformamide, N,N-diéthylformamide, N,N-diméthylacétamide et N,N-diéthylacétamide.

**9.** Électrolyte polymère selon la revendication 6, dans lequel le sel de lithium est au moins l'un choisi parmi le groupe constitué de LiSCN, $LiN(CN)_2$, $LiClO_4$, $LiBF_4$, $LiAsF_6$, $LiPF_6$, $LiCF_3SO_3$, $LiN(SO_2F)_2$, $Li(CF_3SO_2)_3C$, $LiN(SO_2CF_3)_2$, $LiN (SO_2CF_2CF_3)_2$, $LiSbF_6$, $LiPF_3(C_2F_5)_3$, $LiPF_3(CF_3)_3$, et $LiB(C_2O_4)_2$.

**10.** Électrolyte polymère selon la revendication 1, dans lequel le SIL est imprégné à l'intérieur d'une chaîne du polymère ou contenu sous une forme gonflée à l'intérieur de la chaîne du polymère.

**11.** Électrolyte polymère selon la revendication 1, dans lequel l'électrolyte polymère est une membrane d'électrolyte polymère sous forme de réseau.

**12.** Procédé de fabrication d'un électrolyte polymère selon la revendication 1 comprenant les étapes de :

(S1) mélange

d'un monomère comprenant des unités de répétition d'oxyde d'éthylène (EO),
d'un agent de polymérisation par transfert de chaîne réversible par addition-fragmentation (agent RAFT) comprenant des groupes styrène à ses extrémités respectives,
d'un liquide ionique de solvate (SIL) comprenant (a) un sel de lithium et (b) un matériau à base de glyme ou un matériau à base d'amide, et
d'un initiateur, pour préparer une solution mélangée ;

(S2) élimination de l'oxygène dans la solution mélangée obtenue à l'étape (S1) ci-dessus ; et
(S3) application de la solution mélangée, dont l'oxygène a été retiré à l'étape (S2) ci-dessus, sur un substrat et durcissement du résultat.

**13.** Procédé de fabrication de l'électrolyte polymère selon la revendication 12, dans lequel, à l'étape (S1), 40 % en poids à 60 % en poids du monomère contenant des unités de répétition d'OE ; 3 % en poids à 10 % en poids de l'agent RAFT ; 30 % en poids à 50 % en poids du SIL ; et 0,1 % en poids à 1 % en poids de l'initiateur sont mélangés.

**14.** Batterie secondaire au lithium comprenant l'électrolyte polymère selon l'une quelconque des revendications 1 à 11.

【Figure 1】

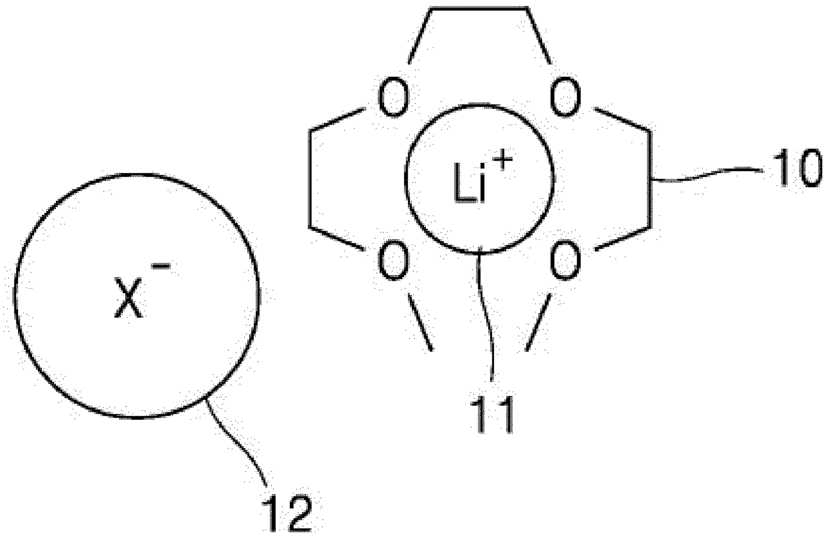


【Figure 2】

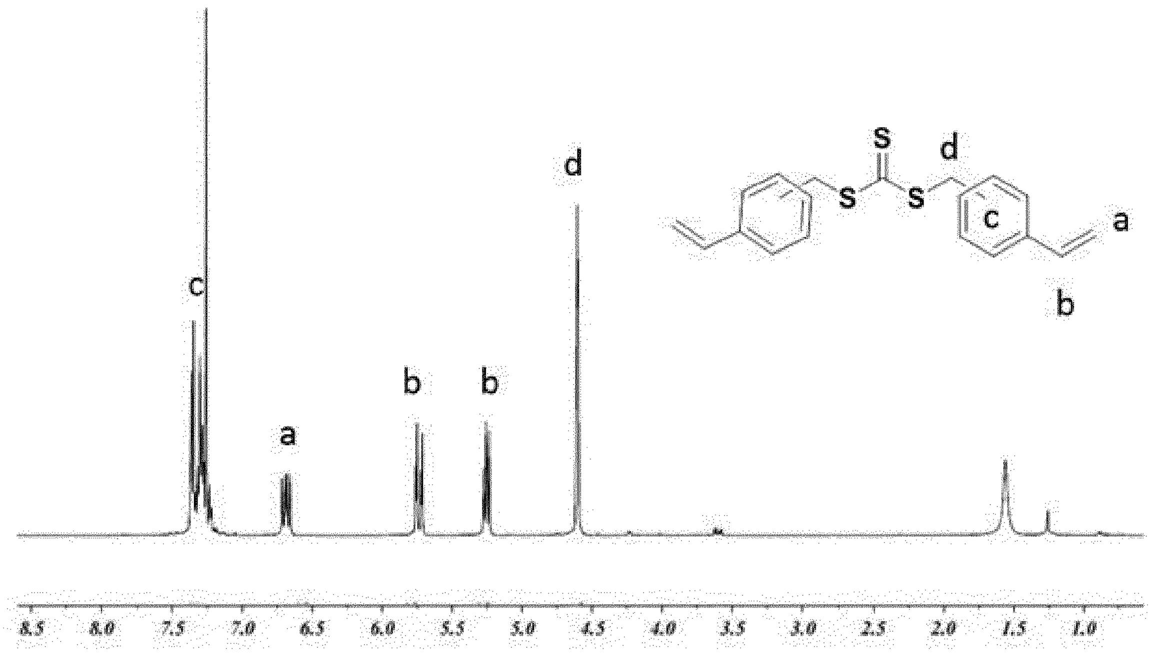

【Figure 3a】

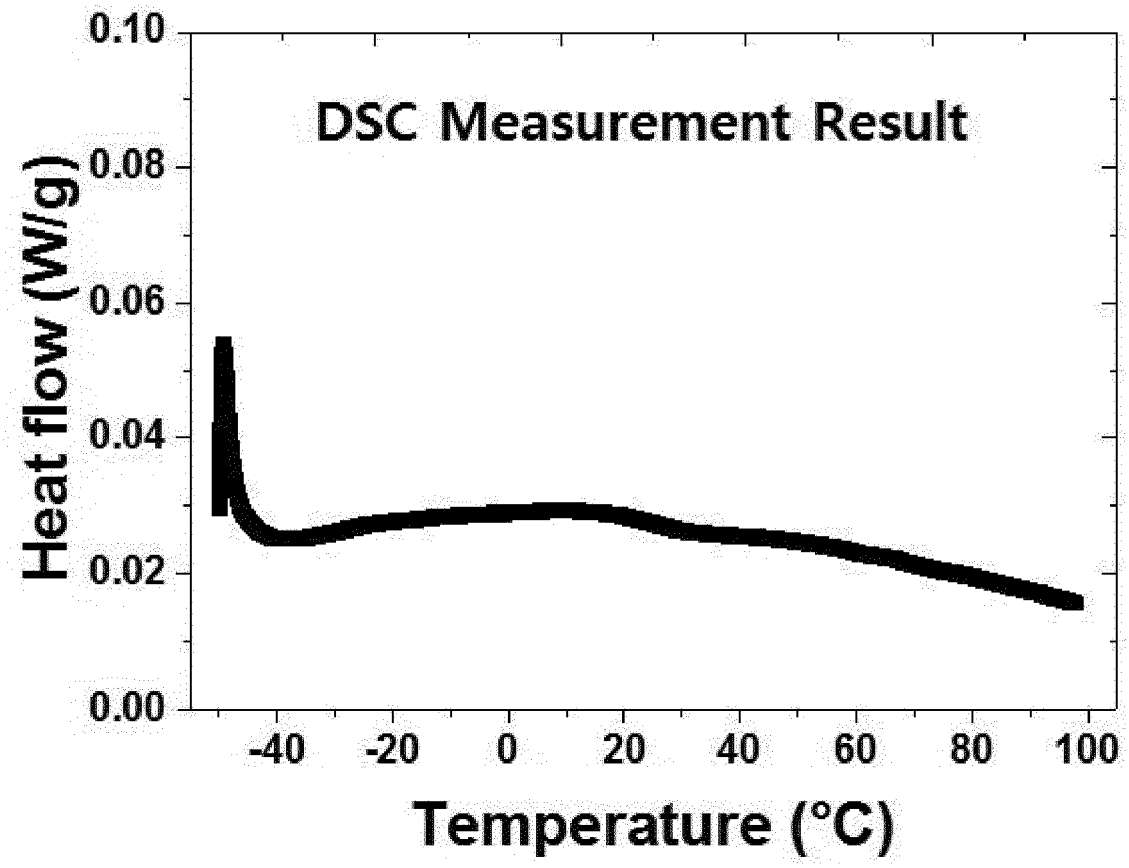


【Figure 3b】

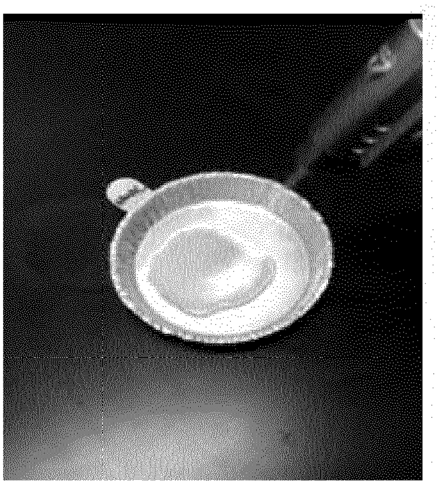

【Figure 4】

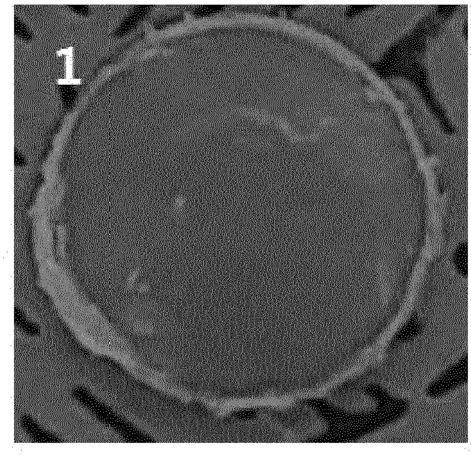



Example 1

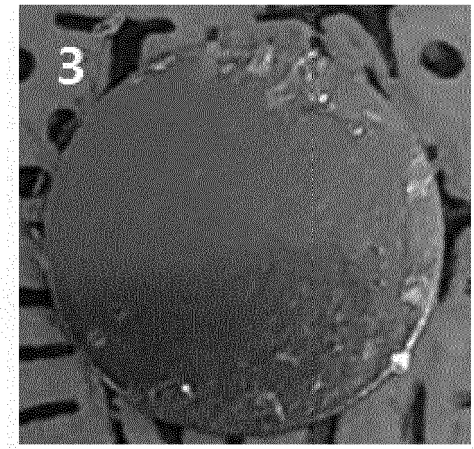



Example 3

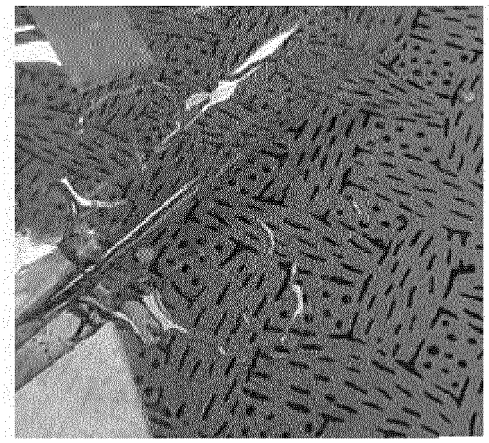

Comparative Example 1

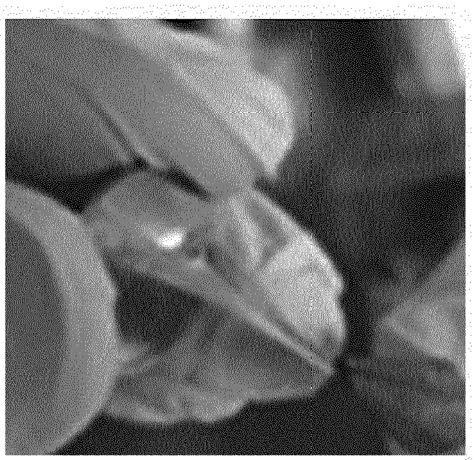

Comparative Example 2

【Figure 5】

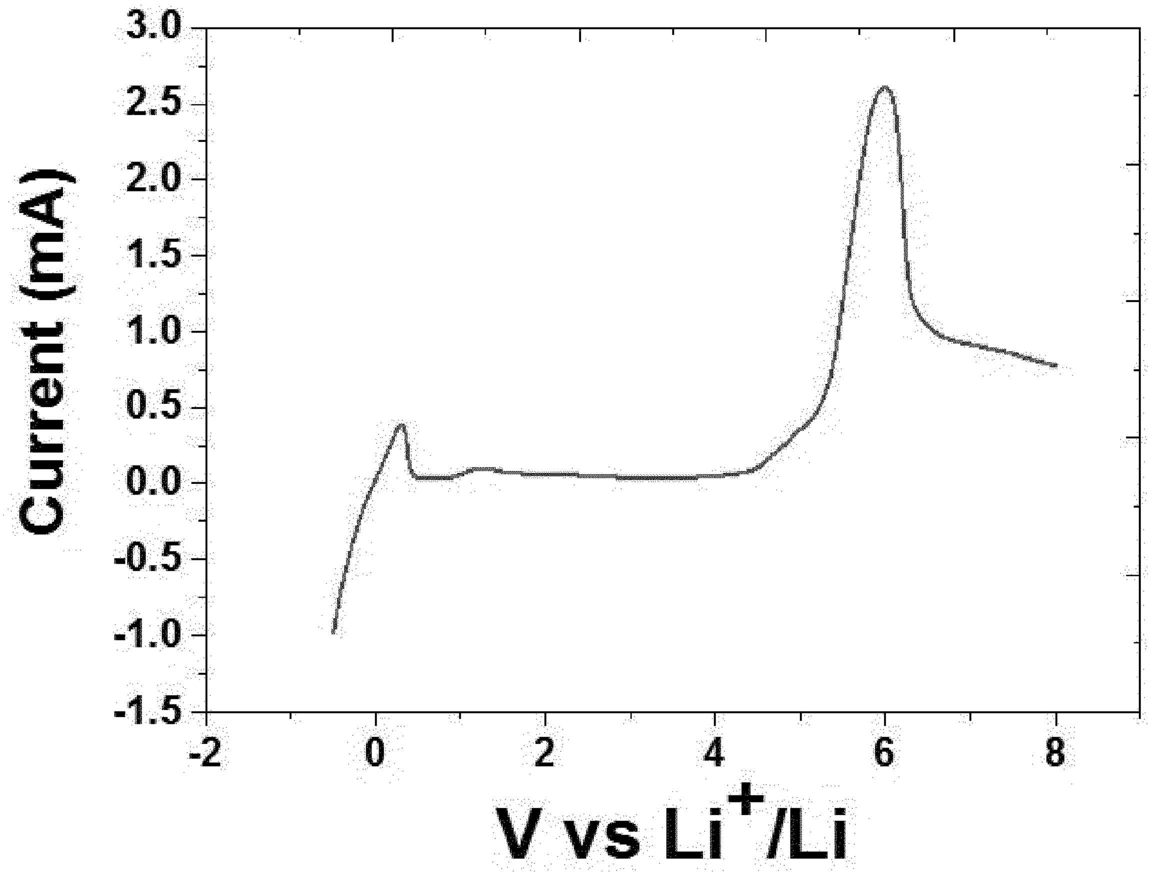

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020180086460
- KR 1232607
- KR 20170083387